**Europäisches Patentamt**

**European Patent Office**

**Office européen des brevets**

(19)

(11) Numéro de publication: **0 253 719 B1**

(12) **FASCICULE DE BREVET EUROPEEN**

(45) Date de publication du fascicule du brevet:
**10.10.90**

(21) Numéro de dépôt: **87401600.9**

(22) Date de dépôt: **08.07.87**

(51) Int. Cl.⁵: **A47J 43/046,** B26D 7/24,
A47J 42/56

(54) Trémie d'introduction de denrées dans un appareil de traitement des aliments.

(30) Priorité: **16.07.86 FR 8610323**

(43) Date de publication de la demande:
**20.01.88 Bulletin 88/3**

(45) Mention de la délivrance du brevet:
**10.10.90 Bulletin 90/41**

(84) Etats contractants désignés:
**BE CH DE ES GB IT LI LU**

(56) Documents cités:
**EP-A- 0 084 745**
**EP-A- 0 177 748**
**DE-C- 519 164**
**US-A- 2 208 335**

(73) Titulaire: **ROBOT-COUPE S.A., 12, rue du Maréchal
Leclerc, F-71303 Montceau-les-Mines(FR)**

(72) Inventeur: **Fleche, Michel, 17 rue Lavoisier,
F-71450 Blanzy(FR)**

(74) Mandataire: **Viard, Jean, Cabinet VIARD 28 bis, avenue
Mozart, F-75016 Paris(FR)**

ACTORUM AG

## Description

La présente invention a pour objet une trémie d'introduction de denrées dans un appareil de préparation des aliments, et en particulier, mais non exclusivement, dans un appareil du type coupe-légumes.

On sait que dans ces appareils la coupe des légumes se fait au moyen de disques tournant à grande vitesse à la partie supérieure de la cuve ou récipient, les disques pouvant porter des couteaux ou profils coupants divers. Dans ces conditions, afin d'éviter tout accident, il est indispensable que ne puisse pas se produire un contact entre le disque et un doigt de l'utilisateur. Pour obtenir ce résultat, des règlementations diverses ont défini une hauteur minmale et un diamètre maximal de la trémie ou goulotte permettant d'introduire les aliments à couper. Malheureusement, ces dimensions, destinées à interdire le passage de la main à l'intérieur de la goulotte, limitent les possibilités d'utilisation de ces appareils à des légumes ou des produits de section relativement petite. Il est alors nécessaire de couper au préalable certaines denrées à traiter, ce qui nuit au rendement de tels appareils.

Il a déjà été proposé de prévoir sur ces appareils des moyens d'introduction permettant l'alimentation de produits ou de légumes de dimensions relativement importantes tels que des choux ou des pommes de terre. Dans EP-A-O 084 745 est décrit un dispositif d'introduction d'aliments de grandes dimensions dans un appareil de préparation d'aliments du type comprenant un socle, un arbre d'entraînement faisant saillie à partir du socle pour recevoir sur un moyeu un outil de coupe portant une lame, un moteur étant prévu pour entraîner en rotation l'arbre d'entraînement à l'intérieur du socle et la cuve étant montée sur le socle de manière amovible en entourant l'arbre d'entraînement. Le dispositif décrit dans ce brevet comprend une trémie tubulaire dont le diamètre est sensiblement égal à celui de la cuve, une cloison faisant saillie radialement au centre de la trémie, cette paroi étant terminée par un bossage central qui surplombe ou recouvre le bord le plus central de la lame, la surface interne de la trémie recouvrant le bord le plus extérieur de la lame quand l'outil est monté sur le moyeu. La paroi radiale a pour but de maintenir les produits à couper qui, sans sa présence, seraient entraînés en rotation. Le disque portant au moins un outil de coupe sert de séparation entre la trémie d'alimentation et la cuve destinée à recevoir les produits coupés. Par ailleurs, pour que la coupe s'exerce normalement, il est nécessaire d'appliquer sur les produits à couper une certaine pression. Il est connu d'appliquer cette pression à l'aide d'un poussoir dont la section est sensiblement égale à la section de la trémie. Dans EP-A 0 084 745, la sécurité est assurée par la présence d'un poussoir dans la goulotte.

Une autre solution décrite dans le FR-A 2 403 771 est utilisée dans des appareils professionnels. Elle consiste à utiliser une trémie cylindrique haute montée au-dessus de la cuve, la paroi interne de la trémie présentant des fentes verticales destinées à recevoir au moins une cloison radiale s'étendant jusqu'à proximité immédiate du centre de la trémie. Le poussoir de la trémie présente des fentes permettant le passage de celui-ci dans les secteurs définis par les cloisons. Ce poussoir est actionné par un piston et coopère avec un interrupteur qui valide la mise en marche du moteur seulement lorsque le poussoir est dans une position telle qu'il obture un secteur d'au moins 180° de la surface d'entrée de la trémie. Bien que cette dernière permette le traitement d'aliments de grandes dimensions, elle requiert une lame spécialement adaptée et une pluralité de cloisons, les résultats, tant au centre que sur les bords de la trémie, n'étant pas satisfaisants.

Dans EP-A 0 177 748 est décrit un poussoir monté coulissant dans un tube protecteur qui est articulé sur le couvercle. Du côté opposé à l'articulation est prévue une attache permettant de verrouiller le guide sur la goulotte, cette attache portant des moyens d'action sur une tige poussoir agissant sur un interrupteur de sécurité par l'intermédiaire de la tige poussoir solidaire de la cuve. Ce dispositif est d'une construction complexe compte tenu de ce que l'axe d'articulation est fixée sur le couvercle du tube protecteur et du fait que les moyens de sécurité sont diamétralement opposés à l'axe d'articulation. Cette complexité est incompatible avec la robustesse nécessaire à un appareil professionnel.

D'autres trémies permettant d'introduire des aliments de dimensions relativement grandes sont décrites dans les brevets US-A 2 414 075, DE-A 2 4 542 084, US-A 2 796 103, GB-B 701 674 et US-A 4 216 917. Aucune de ces trémies ne donne pleinement satisfaction dans le cas d'un coupe-légumes professionnel.

La présente invention a pour objet une trémie d'introduction permettant de charger des aliments même de grandes dimensions dans un appareil de traitement des aliments à moteur électrique, en assurant une parfaite sécurité de fonctionnement pour l'utilisateur.

Selon la présente invention, la trémie d'introduction de denrées dans un appareil de traitement des aliments comprenant un socle incluant un moteur électrique dont l'arbre fait saillie à la surface du socle, une cuve montée de manière amovible sur ledit socle, et un couvercle pouvant être verrouillé sur la cuve, l'arbre moteur pouvant recevoir différents outils, le couvercle présentant une ouverture entourée par une goulotte, un poussoir pouvant être introduit dans la goulotte afin de pousser les aliments vers les outils, un support de poussoir, à l'intérieur duquel peut coulisser une tige-poussoir terminée par une palette dont la section est sensiblement égale à la section interne de la goulotte, étant monté pivotant autour d'un axe d'articulation, ledit support incluant des moyens de sécurité de mise en marche du moteur, est caractérisée en ce que le support de poussoir est articulée à la partie supérieure de la goulotte, lesdits moyens de sécurité de mise en marche du moteur consistant en un aimant monté dans le support de poussoir, au voisinage de l'axe d'articulation du support sur la goulotte, de manière à venir, en position basculée du support sur la goulotte, en face d'un barreau magnétique s'étendant dans une position sensiblement parallèle à l'axe de la goulotte, le barreau inclus dans un logement affleurant la surface supérieure du couvercle, l'extrémité inférieure du barreau magnétique venant, après montage du couvercle sur la cuve, au regard d'un contacteur à commande magnétique.

Ainsi, c'est l'introduction du poussoir dans la goulotte qui permet de valider la mise en marche du moteur et la présence du poussoir empêche le passage de la main ou même d'un doigt pouvant venir en contact avec l'outil de coupe, l'aimant de commande ne venant dans l'alignement du barreau et du contacteur que lorsque le couvercle est en place et que le poussoir est dans sa position de travail.

D'autres caractéristiques et avantages de la présente invention apparaîtront au cours de la description qui va suivre d'un mode particulier de réalisation, donné uniquement à titre d'exemple non limitatif, en regard des dessins qui représentent :

- la figure.1, une vue en perspective du couvercle, de la goulotte et du poussoir ;
- la figure 2, une vue par-dessus du même ensemble en position ouverte ;
- la figure 3, une vue montrant l'impossibilité de déclenchement du moteur tant que le poussoir n'occupe pas sa position la plus haute dans son support;
- la figure 4, une vue de la goulotte en position de travail ;
- la figure 5, une coupe verticale montrant le montage de l'aimant permettant d'assurer la sécurité magnétique de fonctionnement.

Sur les figures, où les mêmes références désignent les mêmes éléments, on distingue un couvercle 1 pouvant être assujetti d'une manière amovible ou articulé sur une cuve 2. A partir de la surface supérieure du couvercle 1, fait saillie une goulotte 3 de forme générale hémicylindrique. A la partie supérieure de la goulotte et du côté extérieur est fixée une chape 4 sur laquelle est tourillonné un support de poussoir 5. Au-dessous de la chape 4 s'étend un conduit 6 sensiblement perpendiculaire à la surface du couvercle 1, et à l'intérieur duquel est monté un barreau magnétique 7.

Dans le support de poussoir 5 peut coulisser une tige poussoir 8 terminée à sa partie inférieure par une palette 9 de section légèrement inférieure à la section de la goulotte 3.

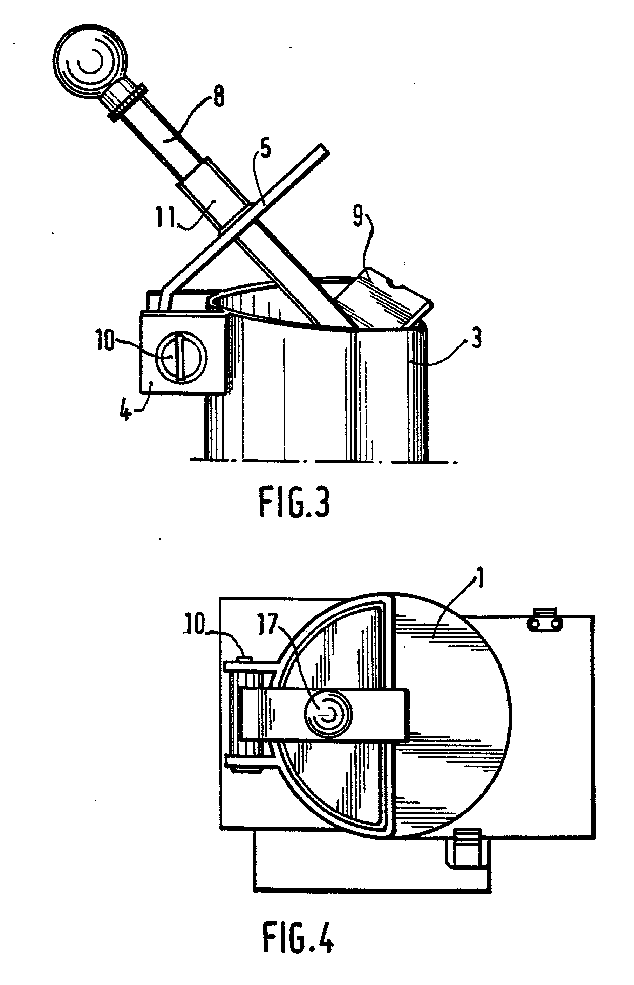

Comme cela apparaît sur la figure 3, la palette 9 ne peut pénétrer à l'intérieur de la goulotte 3 que lorsqu'elle est en position haute à l'intérieur du support de poussoir 5. En effet, étant donné la longueur de la tige poussoir sensiblement égale à la hauteur de la goulotte et l'articulation sur l'axe 10, la palette 9 ne peut pénétrer dans la goulotte qu'après avoir été ramenée en position haute. Le support de poussoir comprend une partie formant guide 11 destinée à permettre un déplacement axial du poussoir et, à la partie opposée à l'axe d'articulation 10, une surface de butée ou portée 12 qui prend appui contre le côté de la goulotte opposé à l'axe d'articulation. En effet, pour exercer à l'aide de la tige poussoir une pression notable, il est nécessaire que le support de poussoir repose sur des points d'appui fixes qui sont respectivement l'axe d'articulation 10 et la surface de portéée 12. La tige-poussoir 8 est guidéée par le palier 11 de manière à ce que les bords de la palette 9 ne viennent pas frotter contre la paroi interne de la goulotte 3, ce qui introduirait des frottements nuisibles à l'obtention d'un bon résultat.

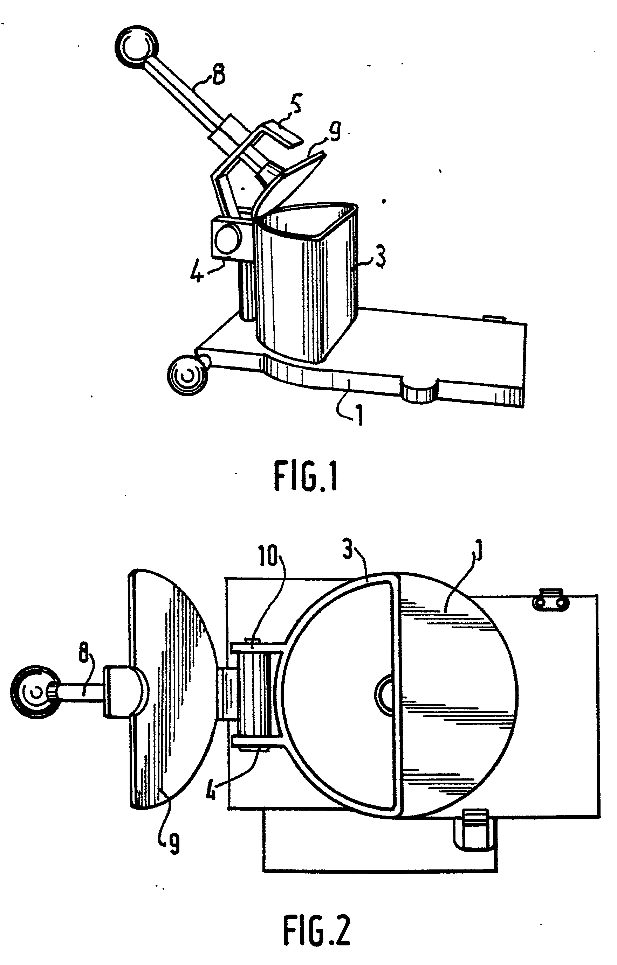

Sur la figure 1, la trémie est en position d'ouverture, c'est-à-dire que le support 5 a subi un pivotement après que le poussoir 8 ait été remonté à l'intérieur du guide 11, ce qui correspond à la position supérieure de la palette 9. Dans ces conditions, le support 5 peut pivoter autour de son axe d'articulation 10.

Comme cela apparaît mieux sur la figure 2, le mouvement de pivotement complet dégage entièrement la trémie 3 dans laquelle peut être introduit un légume ou plus généralement une denrée de grandes dimensions. Comme cela apparaît sur la figure 2, la goulotte 3 présente une section sensiblement semi-circulaire, des coins arrondis permettant d'éviter l'accumulation de matière dans ceux-ci. La forme semi-circulaire correspond pratiquement à la surface balayée par l'outil de coupe, surface qui doit éviter le bord extérieur de l'outil qui, pratiquement, ne peut pas présenter de surface coupante et d'autre part, la partie centrale dans laquelle la vitesse tangentielle de l'outil de coupe est nulle ou pratiquement nulle. Ainsi, grâce à la forme adoptée, la surface de travail est optimale.

Après chargement de la goulotte, le support de poussoir est basculé autour de l'axe 10 dans la direction inverse de la précédente. Comme cela apparaît clairement sur la figure 3, le poussoir, et plus précisément la palette 9, ne peuvent pénétrer à l'intérieur de la goulotte 3 que lorsque la tige de poussoir 8 est en position haute. Bien entendu, le débattement de la tige 8 à l'intérieur du guide 11 est égal à la hauteur de la goulotte ou légèrement inférieur à celle-ci.

En fin de travail, ces différents organes occupent la position représentée sur la figure 4, la tige de poussoir venant en butée par la boule 17 contre la partie supérieure du guide 11, de manière à ce qu'en aucun cas la palette 9 ne puisse venir en contact avec l'outil de coupe non représenté. Bien entendu, au cours de l'opération de coupe, la matière à couper est maintenue par les bords de la goulotte contre tout entraînement en rotation.

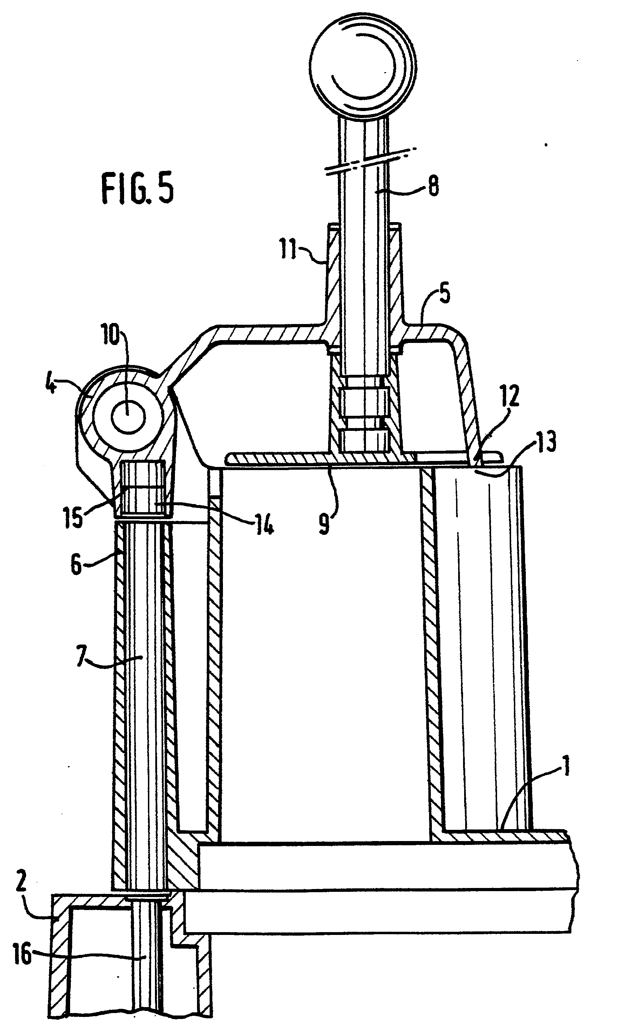

Sur la figure 5 est représentée en coupe une trémie d'introduction selon l'invention. Un aimant 14 est monté, par collage, à l'intérieur d'une cavité 15 prévue à la partie inférieure du support de poussoir 5, sensiblement à l'aplomb de l'axe de pivotement 10. Lorsque le support 5 prend appui par son bord 12 sur la partie supérieure 13 de la goulotte, l'aimant 14 vient en regard du barreau magnétique 7 à l'intérieur duquel il induit un champ magnétique, champ magnétique qui se répercute à la partie inférieure du barreau 7, pour agir sur un contacteur à commande magnétique 16 pouvant être par exemple du type ILS. Le contacteur 16 ferme alors le circuit d'alimentation du moteur, et celui-ci peut être mis en route à l'aide d'un interrupteur non représenté.

A la fin des opérations, le poussoir 8 est remoté vers le haut de la goulotte et le support de poussoir 5 peut pivoter autour de son axe. Au cours de ce mouvement, l'aimant 14 bascule et le champ induit à l'intérieur du barreau 7 est supprimé. Il en résulte que le contacteur magnétique 16 s'ouvre et que le moteur ne peut plus être mis en route, ce qui assure la sécurité désirée. De même, le moteur ne peut pas être mis en route lorsque le couvercle n'est pas en place puisqu'aucun aimant n'agit alors sur le contacteur 16. Bien entendu, ce dispositif de sécurité magnétique est couplé avec des moyens de verrouillage du couvercle sur la cuve, de manière à ce que le contact ne puisse être établi que lorsque le couvercle est dans une position déterminée par rapport à la cuve 2.

## Revendications

1. Trémie d'introduction de denrées dans un appareil de traitement des aliments comprenant un socle incluant un moteur électrique dont l'arbre fait saillie à la surface du socle, une cuve (2) montée de manière amovible sur ledit socle, et un couvercle (1) pouvant être verrouillé sur la cuve (2), l'arbre moteur pouvant recevoir différents outils, un couvercle présentant une ouverture entourée par une goulotte (3), un poussoir (8) pouvant être introduit dans la goulotte (3) afin de pousser les aliments vers les outils, un support de poussoir (5), à l'intérieur duquel peut coulisser une tige-poussoir (8) terminée par une palette (9) dont la section est sensiblement égale à la section interne de la goulotte (3), étant monté pivotant autour d'un axe d'articulation (10), ledit support (5) incluant des moyens de sécurité de mise en marche du moteur, caractérisée en ce que le support de poussoir (5) est articulé à la partie supérieure de la goulotte (3), lesdits moyens de sécurité de mise en marche du moteur consistant en un aimant (14) monté dans le support de poussoir (5), au voisinage de l'axe d'articulation (10) du support (5) sur la goulotte (3), de manière à venir, en position basculée du support (5) sur la goulotte (3), en face d'un barreau magnétique (7) s'étendant dans une position sensiblement parallèle à l'axe de la goulotte, le barreau (7) inclus dans un logement (6) affleurant la surface supérieure du couvercle (1), l'extrémité inférieure du barreau magnétique (7) venant, après montage du couvercle (1) sur la cuve (2), au regard d'un contacteur à commande magnétique (16).

2. Trémie selon la revendication 1, caractérisée en ce que le support de poussoir (5) est articulé dans une chape (4) autour d'un axe (10), et présente une surface de butée (12) contre la surface supérieure (13) de la goulotte (3).

3. Trémie selon l'une des revendications précédentes, caractérisée en ce que le support de poussoir présente un palier de guidage (11) dans lequel la tige de poussoir (8) est mobile en translation sur une hauteur sensiblement égale à la hauteur de la goulotte (3).

4. Trémie selon l'une quelconque des revendications précédentes, caractérisée en ce que la goulotte (3) présente une section semi-circulaire à coins arrondis recouvrant sensiblement la moitié de la surface de la cuve (2), à l'exception des bords et de la partie centrale.

## Patentansprüche

1. Behälter zum Einfüllen von Lebensmitteln in eine Vorrichtung zur Bearbeitung von Nahrungsmitteln, der einen Sockel mit einem Elektromotor, dessen Welle aus dem Sockel herausragt, eine vom Sockel abnehmbare Wanne (2) und eine mit der Wanne (2) verriegelbare Abdeckhaube (3) besitzt, wobei an der Motorwelle unterschiedliche Bearbeitungswerkzeuge anbringbar sind und die Abdeckhaube eine von einem Einfüllbehältnis (3) umgebene Öffnung aufweist, mit einem in das Einfüllbehältnis (3) einführbaren Stößel (8), der mit einer dem Querschnitt des Einfüllbehältnisses (3) genau entsprechenden Platte (9) versehen ist und zum Andrücken der Nahrungsmittel an die Bearbeitungswerkzeuge dient, und mit einem um eine Anlenkachse (10) schwenkbar gelagerten Stößelträger (5), in dem der Schaft des Stößels (8) längsbeweglich geführt ist und der Sicherheitselemente zur Inbetriebnahme des Motors enthält, dadurch gekennzeichnet, daß der Stößelträger (5) an einem Oberteil des Einfüllbehältnisses (3) schwenkbar gelagert ist, daß die Sicherheitselemente zur Inbetriebnahme des Motors einen im Stößelträger (5) gegenüber der Anlenkachse (10) so angeordneten Magneten (14) umfassen, daß dieser bei auf das Einfüllbehältnis (3) gekippter Position des Stößelträgers (5) gegenüber einem magnetischen Stab (7) in einer genau parallelen Lage zur Einfüllbehälterachse liegt, daß der von einem Lager (6) umgebene magnetische Stab (7) mit der Oberfläche der Abdeckhaube (1) bündig ist und daß nach der Montage der Abdeckhaube (1) auf der Wanne (2) das untere Ende des magnetischen Stabes (7) einem Magnetkontakt (16) gegenübersteht.

2. Behälter nach Anspruch 1, dadurch gekennzeichnet, daß der Stößelträger (5) um eine Achse (10) drehbar in einem Jochträger (4) gelagert ist und eine Stützkante (12) für die Abschlußfläche (13) des Behälters (3) bildet.

3. Behälter nach einem der vorhergehenden Ansprüche, dadurch gekennzeichnet, daß der Stößelträger (5) eine Gleitführung (11) aufweist, in welcher der Schaft des Stößels (8) um ein genau der Höhe des Einfüllbehältnisses (3) entsprechendes Maß verschiebbar ist.

4. Behälter nach einem vorhergehenden Anspruch, dadurch gekennzeichnet, daß das Einfüllbehältnis (3) einen halbkreisförmigen, an den Ecken abgerundeten Querschnitt hat, der mit Ausnahme der Wände und des Mittelteils genau die Hälfte der Oberfläche der Wanne (2) abdeckt.

## Claims

1. A hopper for inserting into a food processor apparatus comprising a base which includes an electric motor whose shaft projects through the surface of the base, a bowl (2) removably mounted on said base, and a cover (1) capable of being locked onto the bowl (2), the motor shaft being capable of receiving various different tools, the cover having an opening surrounded by a chute (3), and a pusher (8) capable of being inserted into the chute (3) in order to push food towards the tools, a pusher support (5) slidably receiving a pusher rod (8) terminated by a blade (9) whose section is substantially equal to the inside section of the chute (3) being pivotally mounted about a hinge axis (10), the said support (5) including safety means for switching on the motor, the hopper being characterized in that the pusher support (5) is hinged to the top portion of the chute (3), the said safety means for switching on the motor consisting on a magnet (14) monted in the pusher support (5) in the vincinity of the hinge axis (10) of the support (5) on the chute (3) in such a manner as to come, in the tilted position of the support (5) on the chute (3), opposite a magnetic bar (7) extending in a position substantially parallel to the axis of the chute, the bar (7) included in a housing (6) extending up to the top surface of the cover (1), and the bottom end of the magnetic bar (7) coming opposite a magnetically controlled switch (16) when the cover (1) is mounted on the bowl (2).

2. A hopper according to claim 1, characterized in that the pusher support (5) is pivoted in a clevis (4) about an axis (10) and has an abutment surface (12) for pressing against the top surface (13) of the chute (3).

3. A hopper according to any preceding claim, characterized in that the pusher support has a guide collar (11) through which the pusher rod (8) is mounted to slide over a stroke which is substantially equal to the height of the chute (3).

4. A hopper according to any preceding claim, characterized in that the chute (3) has a semicircular cross-section with rounded corners which covers substantially one-half of the area of the bowl (2) while avoiding its periphery and its central portion.

FIG.1

FIG.2

FIG.3

FIG.4

FIG.5